Europäisches Patentamt

European Patent Office

Office européen des brevets

(11) Numéro de publication: **0 285 477**
**A1**

## (12) DEMANDE DE BREVET EUROPEEN

(21) Numéro de dépôt: 88400556.2

(22) Date de dépôt: 10.03.88

(51) Int. Cl.⁴: **H 04 B 5/00**
**B 60 R 16/02, B 62 D 53/12**

(30) Priorité: 10.03.87 FR 8703302
10.03.87 FR 8703303

(43) Date de publication de la demande:
05.10.88 Bulletin 88/40

(84) Etats contractants désignés: **DE FR IT NL**

(71) Demandeur: **RENAULT VEHICULES INDUSTRIELS**
**Société Anonyme dite:**
**129 rue Servient "La Part Dieu"**
**F-69003 Lyon (FR)**

(72) Inventeur: **Reynaud, Philippe**
**12, rue Pierre Robin**
**F-69707 Lyon (FR)**

(74) Mandataire: **Saint Martin, René**
**Régie Nationale des Usines Renault Direction des**
**Recherches et Développements Service 0804 8-10,**
**Avenue Emile-Zola**
**F-92109 Boulogne Billancourt Cedex (FR)**

(54) Dispositif de transmission d'informations applicable notamment aux véhicules accouplés.

(57) La présente invention a pour objet un dispositif de transmission d'informations entre véhicules accouplés.

Elle est caractérisée par le fait que chaque véhicule comprend au moins un élément (21) émetteur-récepteur coopérant sans contact avec un élément (22) équivalent de l'autre véhicule, les éléments étant montés à proximité du point d'articulation (18) entre véhicules.

Application notamment aux semi remorques et au matériel ferroviaire.

FIG.1

EP 0 285 477 A1

## Description

## DISPOSITIF DE TRANSMISSION D'INFORMATIONS APPLICABLE NOTAMMENT AUX VEHICULES ACCOUPLES

La présente invention a pour objet des dispositifs de transmission d'informations sans contact et en particulier pour la transmission de données entre véhicules accouplés, chaque véhicule comprenant au moins un élément émetteur-récepteur coopérant sans contact avec un élément équivalent de l'autre véhicule, les éléments étant montés à proximité du point d'articulation entre véhicules.

Le dispositif s'applique en particulier à la transmission de données entre véhicules accouplés tels que tracteurs et remorques ou semi-remorques, trains de chemin de fer, etc.

Le problème des liaisons et en particulier des liaisons électriques et électroniques entre véhicules accouplés est bien connu de l'art antérieur et a été résolu jusqu'à présent par des accouplements électriques associés ou non aux moyens d'accouplement mécanique. Le plus souvent ces accouplements électriques sont réalisés à l'aide de câbles et d'éléments mâles et femelles nécessitant un montage manuel.

Or le développement des véhicules accouplés et l'automatisation progressive des systèmes d'accouplements commandés directement depuis la cabine de pilotage, imposent la nécessité de moyens de transmission électriques ou électroniques à accouplement également automatique ou évitant les éléments mécaniques de l'accouplement électrique et les inconvénients que cela peut entraîner (usures, faux contacts, oxydation, mauvaise transmission des signaux, etc.). Par ailleurs, le développement de l'informatique de bord amenant les données de mesure et de contrôle à un ou plusieurs calculateurs et renvoyant les ordres et commandes aux divers organes d'exécution (freins, signalisation, etc.), il devient impératif de transmettre les données sans risque d'erreurs. On remarquera que sur ce point la transmission et le traitement de données numérisées apportent une amélioration par rapport aux données analogiques beaucoup plus sensibles aux erreurs, déviations, distorsions, parasites et autres perturbations. On remarquera également que la multiplication des données transmises se traduit actuellement dans de nombreux cas par des faisceaux de câbles dont le nombre croissant augmente d'autant les problèmes d'accouplement et les risques d'erreurs.

La présente invention a pour but de permettre la transmission bidirectionnelle de données circulant dans des supports ou véhicules d'informations, par exemple dans des bus bidirectionnels et ceci par couplage inductif, sans nécessiter de contacts électromécaniques entre éléments à accoupler. Qui plus est, le fait de transmettre bidirectionnellement toutes données par la voie la plus simple possible ne peut qu'entraîner de nombreux avantages. Elle permet la transmission des données au niveau de la sellette assurant l'accouplement tracteur-remorque où l'environnement est très sale (graisse, poussière, intempéries) et où le matériel est soumis à des vibrations importantes. Dans le cas d'un attelage automatique, le dispositif assure la transmission sans contact avec une grande précision et en offrant des protections contre les perturbations précitées.

Le dispositif selon l'invention est caractérisé par le fait que les elements émetteurs - récepteurs associés à chacun des bus entre lesquels doivent être transmises les données sont disposés face à face, chaque émetteur EM d'un élément coopérant avec le récepteur REC de l'élément lui faisant face, les deux éléments coopérant avec un jeu entre eux et comprenant chacun des circuits de séparation des données selon leur sens de transmission, les données INFO, $\overline{\text{INFO}}$ issues d'un bus étant orientées vers l'émetteur EM de l'ensemble correspondant pour transmission au récepteur REC de l'ensemble situé en face, puis au bus auquel est destiné la transmission des données, la transmission en sens inverse par l'autre émetteur EM et l'autre récepteur REC étant alors interrompu et pouvant reprendre quand cesse la transmission dans le premier sens.

Selon une caractéristique chaque element émetteur-récepteur comprend entre le bus BUS d'une part, et l'émetteur EM et le récepteur REC d'autre part, un circuit de détermination du sens de circulation et de sélection des données issues du bus BUS orientées vers l'émission EM et des données issues de la réception REC et orientées vers le bus BUS, un dispositif d'adaptation des signaux au mode de transmission et l'émetteur et le récepteur proprement dits coopérant avec ceux de l'ensemble faisant face.

Selon une caracteristique, chaque emetteur EM comporte des moyens pour transmettre une onde electromagnetique ou recepteur REC de l'element emetteur - recepteur lui faisant face.

Selon une caractéristique les émetteurs EM et récepteurs REC sont constitués par des pots de ferrites.

Selon une autre caractéristique le fait qu'entre bus BUS et émetteur EM et récepteur REC est prévu un interface assurant la détermination du sens de circulation et la sélection de données dont les signaux de sortie vers l'émission EM, sont associés à la fréquence porteuse émise par un générateur GEN.FREQ.

Pour mieux faire comprendre les caractéristiques techniques et les avantages de la présente invention, on va en décrire un mode de réalisation étant bien entendu que celui-ci n'est pas limitatif quant à son mode de mise en oeuvre et aux applications qu'on peut en faire.

On se référera aux figures suivantes qui représentent schématiquement.

    - la figure 1 un élément émetteur-récepteur du dispositif conforme à l'invention;

    - la figure 2 une coupe verticale sur un accouplement. tracteur/semi-remarque équipé conformément à l'invention.

    - la figure 3 représente, schématiquement, le diagramme-bloc de l'un des deux elements symétriques constitutifs d'un dispositif de transmission de données conforme à l'invention;

- la figure 4 est un ensemble de chronogrammes de signaux du circuit de la figure 3.

Le dispositif selon l'invention s'applique notamment à un ensemble automobile du type semi-remorque comprenant un tracteur et une remorque. On utilise plusieurs calculateurs. Un premier est placé sur la remorque et est essentiellement chargé de l'acquisition des paramètres (charge transportée évaluée par la mesure de pression dans les suspensions, pression de gonflage des pneumatiques; selon les marchandises transportées, température, humidité dans la remorque, etc...).

Le second calculateur, également monté sur la remorque, assure les calculs par exemple pour la commande de la lanternerie.

Le tracteur est équipé d'un calculateur central assurant essentiellement la fonction "conduite" du véhicule.

Ce type d'installation nécessite, pour la transmission d'informations entre tracteur et remorque, une quarantaine de fils de transmission (si l'on n'a pas recours au multiplexage), deux fils d'alimentation et, dans le cas du multiplexage, deux bus série, un bus interne à la fonction "conduite" et un bus "système" pour la fonction gestion.

Ces bus transportent des informations à bas niveau de tension et faible courant.

On notera que les dispositifs de détermination de sens de transmission jouent un rôle important. En effet, dans tout système classique à calculateur central, le bus transmet à la fois les données reçues par le calculateur pour être mises en mémoire et/ou traitées et les données émises par le calculateur. L'utilisation de ce montage classique dans un système conforme à l'invention entraînerait nécessairement un rebouclage. Il faut donc rompre la boucle et inhiber l'émission pendant la réception et réciproquement.

Le dispositif selon l'invention comporte une ou éventuellement plusieurs paires d'éléments de transmission comprenant chacun de préférence un organe émetteur et un organe récepteur coopérant respectivement avec l'organe récepteur et l'organe émetteur de l'autre paire, ces organes pouvant assurer la transmission des données entre eux sans contact direct et étant en communication avec les différents équipements devant donner ou recevoir les informations à transmettre, les éléments de chaque paire étant disposés chacun sur l'un des véhicules accouplés au regard de l'autre élément de la paire monté sur l'autre véhicule de façon qu'en marche normale moyenne, par exemple en ligne droite à charge moyenne, les paires d'organes (émetteur-récepteur) soient disposées dans les meilleures conditions de transmission.

Les deux éléments de chaque paire sont de préférence montés au voisinage de l'axe d'articulation de l'accouplement (l'un sur le tracteur, l'autre sur la semi-remorque, par exemple).

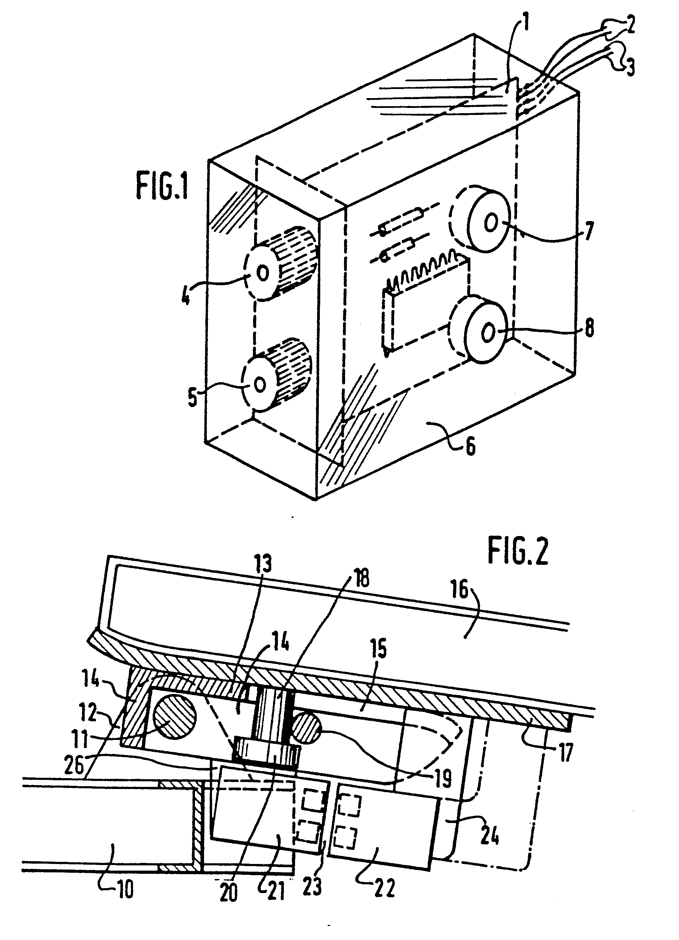

A la figure 1, est représenté schématiquement un élément émetteur-récepteur constitué par un circuit électronique tel que 1, lui-même formé d'une ou plusieurs cartes portant divers composants tel ceux représentés en pointillés . Ce circuit est relié d'une part à l'extérieur par des fils d'alimentation tels que 2 et des connexions telles que 3 pouvant être par exemple un bus de données. Ces connexions relient le circuit émetteur-récepteur 1 aux systèmes capteurs, à au moins un calculateur et aux dispositifs de commande (éclairage, freinage, etc.).

Des moyens d'émission 4 et de réception 5, tels que par exemple des pots de ferrites assurent la liaison avec l'élément émetteur-récepteur associé, monté sur le véhicule accouplé à celui portant le premier. Les moyens d'émission 4 de l'un des éléments émetteurs-récepteurs coopèrent avec les moyens de réception 5 de l'autre et réciproquement. Les deux ensembles émetteurs-récepteurs sont donc montés face à face et tête-bêche. On notera que lorsque les véhicules à accoupler s'accouplent toujours de la même manière, par exemple, un tracteur et toutes les remorques, on peut monter l'ensemble de la figure 1 dans la position représentée, l'émetteur 4 et le récepteur 5 étant le premier au-dessus du second et ceux de l'autre élément montés inversement. Ce sera le cas illustré à la figure 2. Mais dans le cas du matériel ferroviaire par exemple où tous les véhicules (motrices et voitures) peuvent se monter dans un sens ou dans l'autre, il faut monter les moyens émetteurs et récepteurs horizontalement pour avoir par exemple l'émetteur toujours à droite et le récepteur toujours à gauche quand on les regarde en bout. De cette façon, on est toujours sûr de trouver un émetteur face à un récepteur et réciproquement.

L'ensemble du circuit 1, des amorces de fils ou câbles 2, 3 ou plots de branchement, et des moyens émetteurs-récepteurs, est de préférence noyé par inclusion dans une masse 6, par exemple en polymère isolant. Sont également insérés dans cette masse des organes de fixation tels que des écrous filetés 7, 8 ou équivalents pour le montage sur le véhicule correspondant.

A la figure 2, on a représenté très schématiquement en coupe longitudinale un accouplement tracteur/semi-remorque. Le châssis 10 du tracteur (représenté très partiellement) ou élément équivalent porte un axe 11 sensiblement horizontal monté entre des supports tels que 12, solidaires du châssis 10 ou équivalent. Sur cet axe 11, est montée une sellette 13 dont les rebords sont percés pour permettre à la sellette de pivoter en basculant autour de l'axe 11.

La sellette 13 est échancrée en 15 pour permettre l'accouplement dans les conditions ci-après définies. Le châssis 16 de la remorque ou équivalent porte à sa partie inférieure une plaque 17 qui, dans la position d'accouplement repose sur la sellette 13. Des moyens de graissage non représentés de tout type adéquat sont prévus pour permettre le glissement longitudinal de la plaque 17 sur la sellette lors de l'accouplement et le glissement à rotation en marche de l'ensemble dans les virages. Solidaire du châssis 16 et de la plaque 17, le pion 18 passe dans l'échancrure 15 lors de l'accouplement et est maintenu en position par un organe de verrouillage 19 solidaire de la sellette 13, que l'on place pour assurer l'attelage en empêchant le pion 18 de s'écarter de la sellette lors de la traction. Le pion 18 présente une tête élargie 20 empêchant l'extraction accidentelle du pion par le haut. Deux éléments émetteurs-récepteurs 21, 22 sont montés respectivement sur le tracteur et la remorque. Le montage émetteurs E et récepteurs R, tête-bêche, laisse un jeu 23 permettant les mouvements relatifs du fait des braquages, suspensions et autres. L'élément 22 est solidaire de la remorque grâce à un support 24 fixé par exemple à la plaque 17 et qui passe dans l'échancrure 15. Cette dernière est suffisamment large pour permettre le débattement du support 24 dans les virages. On peut aussi envisager une échancrure étroite et un support 24 échappant à la sellette 13, comme indiqué en traits mixtes.

Quand le tracteur recule en vue de l'accouplement avec la remorque, le pion 18 pénètre dans l'échancrure 15, la plaque 17 coulissant sur la sellette 13 qui prend l'orientation angulaire adéquate. Quand le pion 18 est en position en fond d'échancure 15, ou verrouille en 19. Les éléments de transmission au 21, 22 se trouvent alors eux-mêmes automatiquement en position.

L'élément émetteur-récepteur 21 peut être monté comme indiqué à la figure 2, c'est-à-dire sur un support 25 solidaire de la sellette. De la sorte, les deux éléments émetteurs-récepteurs 21 et 22 restent bien face à face, en marche en ligne droite, tant que sellette 13 et plaque 17 sont bien en contact. Un mouvement relatif apparaît cependant dans les virages selon la solution représentée à la figure 2. On peut également lier directement le support 25 au châssis 10, ce qui introduit des mouvements relatifs supplémentaires.

Mais on peut choisir les moyens émetteurs 4 et récepteurs 5 suffisamment larges pour garder la transmission en dépit des mouvements relatifs sans perturbation entre dispositifs voisins ou avec l'extérieur.

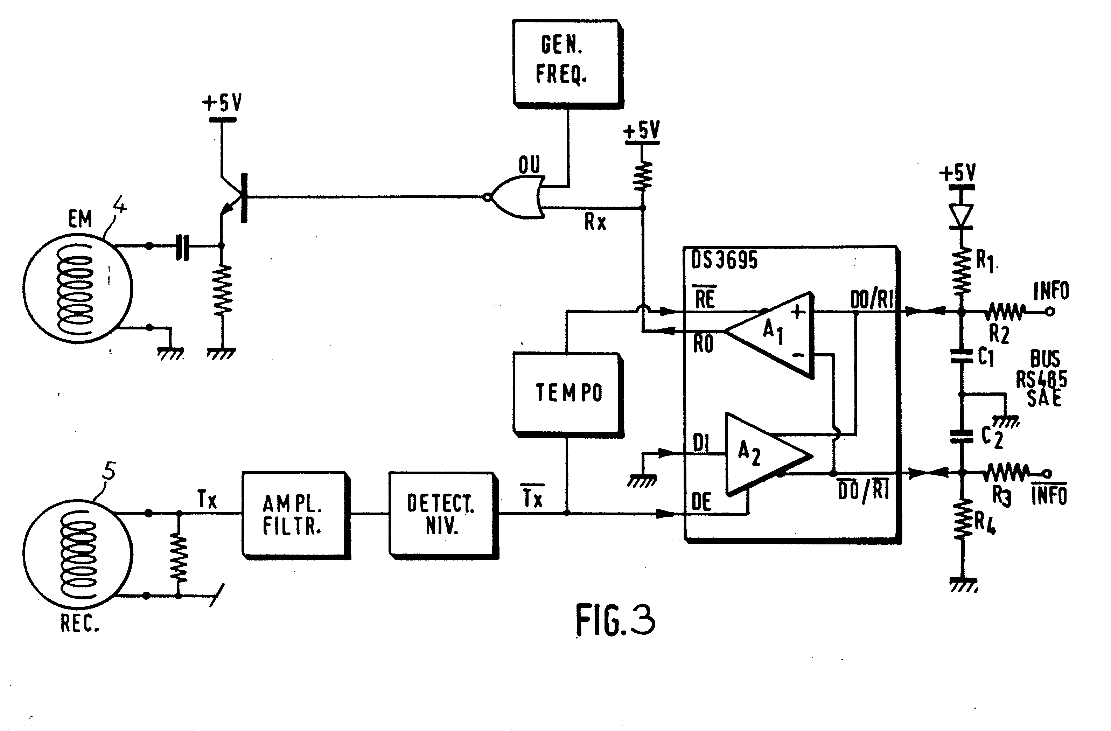

On se réfère à la figure 3 à un bus bidirectionnel de type RS 485 de SAE. On notera que les dispositifs conformes à l'invention sont utilisables sur tout bus présentant deux états :
- un état "basse impédance" à niveau "0" ou "1";
- un état "haute impédance" ci-après dénommé HZ à niveau "1" ou "0", obtenu par exemple par des résistances connectées à une alimentation ou à la masse (montages à résistance dite de "pull-up" ou de "pull-down").

Par ailleurs, tout dispositif conforme à l'invention doit inclure un interface permettant le passage des niveaux électriques spécifiques du bus bidirectionnel aux niveaux logiques habituels et inversement.

Dans le cas du bus RS 485 la solution adéquate illustrée, à titre d'exemple, par la figure, fait appel à l'interface de type DS 3695 dont le synoptique est représenté sur cette même figure.

Sur ce synoptique, les diverses dénominations symboliques ont la signification suivante :
. DO/RI : en liaison avec le bus bidirectionnel, "sortie de données, entrée de réception" (data output/receiver input);
. $\overline{\text{DO}}/\overline{\text{RI}}$ : en liaison avec le bus bidirectionnel, inverse de DO/RI;
. $\overline{\text{RE}}$ : "autorisation de transmettre les données reçues sur le bus" (receiver enable) quand l'état logique est "0";
. RO : "sortie de récepteur" (receiver output); dans le cas où $\overline{\text{RE}}$ est nul, les données reçues sur le bus sont présentes sur RO. Si $\overline{\text{RE}}$ est à +5 V (selon le présente exemple), RO est à l'état de haute impédance;
. DI : "entrée des données logiques" (data input);
. DE : "autorisation d'imposer sur le bus les données issues de DI" (data enable); si DE est à +5 V, le bus est en l'état que présente DI; si DE est à 0 V, le bus est à l'état "haute impédance".

On reviendra, ci-après, sur l'utilisation de cet interface dans le cadre du présent exemple de réalisation.

Le dispositif conforme à l'invention assure la transmission des données entre le bus bidirectionnel (RS 485) et émetteur EM et récepteur REC de l'element recepteur 21 ou 22. Ces emetteur et recepteur d'un élement coopérant, respectivement, avec les récepteur et émetteur de l'élèment symétrique. En supposant, par exemple, le cas du tracteur semi-remorque, l'un des élements est monté sur le tracteur, l'autre sur la semi-remorque. Ces deux elements sont alors montés au voisinage immédiat de la sellette d'accouplement de façon que les émetteurs des deux dispositifs soient en regard des récepteurs assurant, ainsi, la transmission unidirectionnelle sur une voie émission-réception dans un sens et dans l'autre.

Pour la réalisation de ces récepteurs et émetteurs on utilise, selon un mode de réalisation préféré de l'invention, des pots de ferrite, ce qui localise l'émission dans les dimensions géométriques du pot. On ne risque donc pas de perturber d'autres transmissions bien que les paires de dispositifs émission/réception ainsi associées ne soient pas en contact direct et admettent un jeu, ce qui est la base de l'intérêt de l'invention et assure la transmission en dépit des mouvements relatifs liés à ceux des deux éléments de véhicule (ici tracteur et remorque) et des différentes pollutions (graisse, poussière, eau, etc...). Ce système présente, également, l'avantage de rejeter des parasites à la réception, notamment en choisissant les pots de ferrite convenant de la façon la plus adéquate à la fréquence porteuse utilisée.

Le récepteur REC est suivi d'un ensemble amplificateur filtrage AMPL.FILTR. et d'un système de détection de niveau DETECT.NIV. à la sortie duquel les signaux reçus $\overline{\text{T}}_x$ sont envoyés, d'une part à l'entrée DE de l'interface et, d'autre part, à celle $\overline{\text{RE}}$ par l'intermédiaire d'un dispositif temporisateur TEMPO.

Les entrées DO/RI et $\overline{\text{DO}}/\overline{\text{RI}}$ du DS 3695 sont connectées aux entrées INFO et $\overline{\text{INFO}}$ inverses l'une de l'autre du bus RS 485 par l'intermédiaire d'un ensemble tel celui de résistances et de capacités représenté à la figure et monté entre la masse et l'alimentation +5 V à travers une diode. Cet ensemble assure le filtrage et impose les états logiques 1 sur INFO et 0 sur $\overline{\text{INFO}}$ quand on est à l'état 3 que l'on définira plus loin.

Par ailleurs, l'entrée DI de l'interface est, ici, mise à la masse et l'entrée RO est reliée, d'une part à l'alimentation à +5 V par l'intermédiaire d'une résistance et, d'autre part, à l'entrée d'une porte OU dont l'autre entrée est pilotée par un générateur de fréquence porteuse GEN.FREQ. La sortie inverse de la porte OU est reliée à la base d'un transistor dont le collecteur est alimenté à +5 V et l'émetteur relié, d'une part à la masse à travers une résistance et, d'autre part à l'élément d'émission EM par l'intermédiaire d'une capacité.

Le tableau logique du fonctionnement de l'interface est le suivant :

| ETAT | $T_x$ | $T_x$/DE | $\overline{RE}$ | RO | RX | DO/RI | INFO | $\overline{DO/RI}$ | $\overline{INFO}$ |
|---|---|---|---|---|---|---|---|---|---|
| (1) | 0 | 1 | 1 | HZ | 1 | 0 | 0 | 1 | 1 |
| (2) | 1 | 0 | 0 | 1 | 1 | HZ | 1 | HZ | 0 |
| (3) | 1 | 0 | 0 | 0 | 1 | HZ | 0 | HZ | 1 |

Etat (1) Un "0" reçu en INFO-DO/RI doit être transmis. Il correspond à un état prioritaire. La réception est inhibée (RO = HZ), le "0" est imposé sur DO/RI, ce qui se traduit par INFO = 0.

Etat (2) $T_x$ = 1 en état non prioritaire. La réception fonctionne, les sorties DO/RI et $\overline{DO/RI}$ vers le bus sont à l'état haute impédance. Si aucun autre interface qui pourrait être monté en parallèle n'a de "0" à transmettre, INFO = 1 de sorte que RO = 1 et $R_x$ = 1, $R_x$ correspondant à l'entrée de la porte OU en aval de l'alimentation à +5 V.

Etat (3) Comme dans le cas précédent, $T_x$ = 1, mais un autre interface impose un "0" sur la ligne (INFO = 0); cela entraîne RO = 0 et $R_x$ = 0; le "0" reçu est transmis.

En fait, le rôle de cet ensemble est de transmettre les signaux reçus au REC et, dès que cesse la transmission, de repasser à l'émission avec le petit décalage nécessaire pour éviter le risque de bouclage auquel il a été fait allusion plus haut.

Sur le synoptique de la figure, l'entrée $\overline{RE}$ de l'amplificateur $A_1$ joue ce rôle de retardateur-décaleur dans le temps. En ce qui concerne l'amplificateur $A_2$ de ce même synoptique, DE autorise le passage des données de DI, c'est-à-dire le "0" (DI étant à la masse) quand la réception est coupée au profit de l'émission.

En ce qui concerne la temporisation TEMPO, elle sert à déclarer la mise en réception du circuit en fin d'émission d'un "0" du DE. Ceci permet de ne pas relire le "0" imposé et encore présent du INFO du fait de la constante de temps RC du filtrage assuré entre bus RS 485 et interface DS 3695.

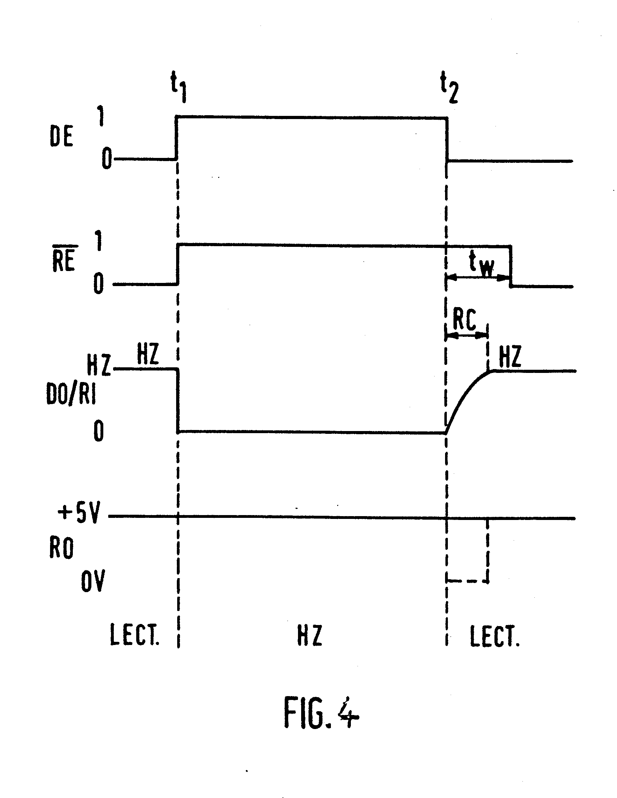

A la figure 4 on a représenté des chronogrammes de signaux DE, $\overline{RE}$, DO/RI et RO, afin d'illustrer le rôle du retard. Le signal reçu en DE passe de 0 à 1 à un instant $t_1$ et repasse de 1 à 0 à l'instant $t_2$.

Le signal $\overline{RE}$ passe de 0 à 1 avec DE mais revient de 1 à 0 avec le retard $T_w$ par rapport à $t_2$ grâce à TEMPO.

En ce qui concerne DO/RI, avant $t_1$ on se trouve en haute impédance HZ pour passer à 0 au temps $t_1$ et revenir progressivement à la haute impédance à partir de $t_2$, du fait de la constante de temps RC. Avant $t_1$, RO est à +5 V (phase de lecture), entre $t_1$ et $t_2$, RO est toujours à +5 V (phase à haute impédance HZ) et le reste après $t_2$ (nouvelle phase de lecture). Mais si l'on n'avait pas de temporisation sur $\overline{RE}$ ($t_w$ = 0), on aurait un décrochage de RO à 0 V (pointillés sur la figure), ce qui serait préjudiciable au bon fonctionnement.

Pour ce qui est du couplage inductif, il s'effectue, selon un mode de réalisation préféré de l'invention, en utilisant une fréquence porteuse (par exemple de 250 kHz ou 500 kHz selon la cadence des informations numériques à transmettre) émise par le générateur GEN.FREQ. Cette fréquence n'est appliquée à la bobine d'émission EH que si INFO reçu du bus est un "0" prioritaire. Du côté réception REC, les signaux à fréquence porteuse sont traités en AMPL.FILTR. par exemple par un premier filtrage suivi d'un amplificateur à gain suffisant pour disposer d'une amplitude adéquate au redressement du signal. En comparant le signal redressé en DETECT.NIV. avec une tension de référence, on crée l'état logique correspondant. Si, par exemple "0" est présent sur le bus d'un ensemble tel celui de la figure 3, il engendre une fréquence en EM sur sa bobine d'émission, l'autre ensemble symétrique associé reçoit en REC ce signal à la fréquence porteuse et le transmet à son bus.

Si "1" est présent sur le bus du premier ensemble, les systèmes ont à leur état naturel sans émission de part et d'autre.

Selon un mode de réalisation préféré de l'invention, on utilise des pots de ferrite. Leur intérêt réside dans la localisation de l'émission à la section du pot. On ne risque donc pas de perturber d'autres transmissions, notamment si on utilise plusieurs paires d'ensembles tels que celui de la figure 1. Par ailleurs, comme on l'a déjà souligné, on rejette les parasites à la réception, les pots étant calculés pour travailler de façon optimale à la fréquence porteuse utilisée.

On notera que, si dans ce qui précède, on s'est référé aux tracteurs et aux semi-remorques qui constituent un domaine d'application préféré de l'invention, il est évident que sans sortir du cadre de la présente invention de nombreuses autres articulations entre véhicules peuvent faire appel à cette invention tels que, par exemple, les éléments de trains de chemin fer (motrices et/ou wagons), en particulier dans le cas de rames articulées, ce qui permet une interchangeabilité des éléments sans intervention sur les connexions électriques ou électroniques de transmission de données. On remarquera également que ces dispositifs s'appliquent, dans tous les cas de transmission d'information, notamment sous forme numérique, ce qui élimine les erreurs ou imprécisions que peuvent entraîner les informations sous forme analogique. Ceci étend donc le domaine d'application à tout ce qui peut être transmis sous forme numérique, ce qui peut aujourd'hui inclure, entre autres, en plus des données de mesure, la commande des données vidéo et/ou audio.

Les dispositifs conformes à l'invention s'appliquent quels que soient le nombre des calculateurs et leurs dispositions. On peut travailler avec un calculateur central unique monté sur le tracteur ou avec plusieurs calculateurs comme indiqué plus haut.

## Revendications

1.- Dispositif de transmission d'information entre véhicules accouplés, dans lequel chaque véhicule comprend au moins un élément (21) émetteur-récepteur coopérant sans contact avec un élément (22) équivalent de l'autre véhicule, les éléments étant montés à proximité du point d'articulation (18) entre véhicules, caractérisé par le fait que les elements émetteurs - récepteurs (21,22) associés à chacun des bus entre lesquels doivent être transmises les données sont disposés face à face, chaque émetteur EM d'un élément coopérant avec le récepteur REC de l'element lui faisant face, les deux élements coopérant avec un jeu entre eux et comprenant chacun des circuits de séparation des données selon leur sens de transmission, les données INFO, $\overline{INFO}$ issues d'un bus étant orientées vers l'émetteur EM de l'ensemble correspondant pour transmission au récepteur REC de l'ensemble situé en face, puis au bus auquel est destiné la transmission des données, la transmission en sens inverse par l'autre émetteur EM et l'autre récepteur REC étant alors interrompu et pouvant reprendre quand cesse la transmission dans le premier sens.

2.- Dispositif selon la revendication 1, caractérisé par le fait que chaque element émetteur-récepteur comprend entre le bus BUS d'une part, et l'émetteur EM et le récepteur REC d'autre part, un circuit de détermination du sens de circulation et de sélection des données issues du bus BUS orientées vers l'émission EM et des données issues de la réception REC et orientées vers le bus BUS, un dispositif d'adaptation des signaux au mode de transmission et l'émetteur et le récepteur proprement dits coopérant avec ceux de l'ensemble faisant face.

3- Dispositif selon l'une des revendications 1 ou 2, caractérisé par le fait que chaque emetteur EM comporte des moyens pour transmettre une onde electromagnetique au recepteur REC de l'element emetteur-recepteur lui faisant face

4 - Dispositif selon la revendication 3, caractérisé par le fait que les émetteurs EM et récepteurs REC sont constitués par des pots de ferrites.

5.- Dispositif selon l'une des revendications 2 ou 3, caractérisé par le fait qu'entre bus BUS et émetteur EM et récepteur REC est prévu un interface assurant la détermination du sens de circulation et la sélection de données dont les signaux de sortie vers l'émission EM, sont associés à la fréquence porteuse émise par un générateur GEN.FREQ.

6.- Dispositif selon l'une des revendications 2 à 5, caractérisé par le fait qu'entre récepteur REC et bus BUS est prévu un ensemble amplificateur-filtreur suivi d'un détecteur de niveau et de l'interface d'accès au bus BUS.

7.- Dispositif selon la revendication 6, caractérisé par le fait que les signaux de sortie du détecteur de niveau sont transmis à l'interface, d'une part directement pour transmission au bus BUS, d'autre part indirectement à travers un dispositif de temporisation TEMPO, empêchant un décrochage de l'interface lors des changements de sens de transmission.

8.- Dispositif selon l'une des revendications 4 à 7, caractérisé par le fait que l'interface est organisé autour de deux amplificateurs dont les entrées de l'un A1 sont reliées aux fils du bus et à la sortie à l'émission EM, l'entrée retard recevant les signaux de temporisateur TEMPO, tandis que l'autre A2 présente une entrée à la masse et les sorties vers les fils du bus BUS inhibant ainsi la réception REC quand fonctionne l'émission EM sous la commande du signal de sortie du détecteur de niveau DETECT. NIV.

9.- Dispositif selon l'une des revendications 1 à 8, caractérisé par le fait qu'entre chaque bus BUS et son ensemble émetteur/récepteur est intercalé un ensemble de filtrage R,C.

10.- Dispositif selon l'une quelconque des revendications précédentes, caractérisé par le fait qu'ils sont appliqués à des ensembles tracteurs/semi-remorques et que l'élément émetteur-récepteur (21) du tracteur est monté sous la sellette (13) et l'élément émetteur-récepteur de la remorque (22) sur un support (24) l'amenant en position à proximité de l'élément (21) du tracteur quant tracteur et remorque sont accouplés.

11.- Dispositif selon la revendication 10, caractérisé par le fait que les émetteurs (EM) et récepteur (REC) sont disposés horizontalement dans le même ordre vue en bout.

FIG.1

FIG.2

FIG.3

FIG. 4

Office européen des brevets

**RAPPORT DE RECHERCHE EUROPEENNE**

Numéro de la demande

EP 88 40 0556

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 431 227 (ELECTRONIQUE MARCEL DASSAULT) * Page 6, lignes 22-30, figure 5 * --- | 1,2 | H 04 B 5/00<br>B 60 R 16/02<br>B 62 D 53/12 |
| A | FR-A-2 458 953 (SAULNIER) * Planches I,II * --- | 1,2 | |
| A | DE-A-3 417 956 (ROBERT BOSCH GmbH) * Figures 3,4 * --- | 1 | |
| A | PATENT ABSTRACTS OF JAPAN, vol. 8, no. 43 (M-279)[1480], 24 février 1984, page 88 M 279; & JP-A-58 199 246 (MITSUBISHI DENKI K.K.) 19-11-1983 * Résumé * --- | 1 | |
| A | DE-A-2 732 626 (NIPPON SOKEN INC.) * Page 8, lignes 13-21 * --- | 4,10,11 | |
| A | FR-A-2 501 855 (SOCIETE D'APPLICATIONS DE LA PHYSIQUE MODERNE ET DE L'ELECTRONIQUE SAPHYMO-STEL) * Figure 3 * --- | 1,10,11 | **DOMAINES TECHNIQUES RECHERCHES (Int. Cl.4)** |
| A | US-A-2 112 364 (GRONDAHL) * Figures 1,2,5 * --- | 1 | H 04 B<br>B 60 R<br>B 62 D<br>B 61 L |
| A | US-A-2 034 616 (GOSSLER) * Figures 1,3 * ----- | 1 | |

Le présent rapport a été établi pour toutes les revendications

| Lieu de la recherche | Date d'achèvement de la recherche | Examinateur |
|---|---|---|
| LA HAYE | 20-06-1988 | ONILLON C.G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)